# Europäisches Patentamt

# European Patent Office

# Office européen des brevets

(19)

(11) Veröffentlichungsnummer: **0 104 539**
**B1**

(12) # EUROPÄISCHE PATENTSCHRIFT

(45) Veröffentlichungstag der Patentschrift:
18.05.88

(51) Int. Cl.⁴: **F 02 D 5/02,** F 02 D 33/00

(21) Anmeldenummer: 83109049.3

(22) Anmeldetag: 14.09.83

(54) Vorrichtung zum Reduzieren des Bremsmomentes von Brennkraftmaschinen, insbesondere Dieselmotoren, in Kraftfahrzeugen beim Schubbetrieb.

(30) Priorität: 25.09.82  DE 3235619
04.08.83  DE 3328219

(43) Veröffentlichungstag der Anmeldung:
04.04.84 Patentblatt 84/14

(45) Bekanntmachung des Hinweises auf die Patenterteilung:
18.05.88 Patentblatt 88/20

(84) Benannte Vertragsstaaten:
AT DE FR GB IT SE

(56) Entgegenhaltungen:
DE-A-2 139 230
DE-A-3 205 079
FR-A-1 526 125
FR-A-2 437 497
FR-A-2 459 373
US-A-3 204 719

(73) Patentinhaber: BAYERISCHE MOTOREN WERKE Aktiengesellschaft, Postfach 40 02 40 Petuelring 130 - AJ- 36, D-8000 München 40 (DE)

(72) Erfinder: Dietrich, Christian, Ing. grad., An der Grundbreite 19, D-8031 Wessling (DE)
Erfinder: Guggenmos, Johannes, Helchenried Fabrikstrasse 6, D-8949 Dirlewang (DE)
Erfinder: Zinnecker, Franz, Rathausstrasse 38, D-8047 Karlsfeld (DE)
Erfinder: Wick, Helmut, Eversbuschstrasse 64, D-8000 München 50 (DE)

(74) Vertreter: Bücken, Helmut, Bayerische Motoren Werke Aktiengesellschaft Postfach 40 02 40 Petuelring 130 - AJ- 30, D-8000 München 40 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren gemäß Oberbegriff des unabhängigen Anspruchs 1.

Das im Oberbegriff des unabhängigen Patentanspruches 1 beschriebene Verfahren bezieht sich beispielsweise gemäß der FR-A-1 526 125 darauf, bei gemischverdichtenden und fremdgezündeten Brennkraftmaschinen im Schub- bzw. Schiebe-Betrieb die Schadstoffanteile im Abgas durch gesteuertes Öffnen der Drosselklappe in Verbindung mit zusätzlicher Kraftstoffzufuhr zu verringern. Diese der Verbesserung der Abgasqualität dienende Ladungssteuerung erfolgt im Schubbetrieb bis zu einem vorgegebenen, minimalen Motordrehzahlbereich von ca. 1400-1300 U/min. Im Schubbetrieb darüber liegende Drehzahlen dienen bei der zur Durchführung des Verfahrens aus der o.g. Druckschrift bekannten Vorrichtung als Signal zur Aktivierung einer vom Saugrohrunterdruck beaufschlagten Steuereinrichtung zur gesonderten Betätigung der Drosselklappe sowie eines Ventils für zusätzliches Kraftstoff-Luftgemisch. Da der Saugrohrunterdruck bekanntlich erst mit in Richtung Schließstellung bewegter Drosselklappe eine zur Betätigung mechanischer Einrichtungen geeignete Größe erreicht, ist die bekannte Vorrichtung für ein Verfahren zur Ladungssteuerung lediglich in dem der vorgenannten Drehzahlschwelle nahen Bereich geeignet. Ferner ist die zur Senkung giftiger Anteile im Abgas der Brennkraftmaschine bewirkte zusätzliche Ladung im Schubbetrieb für eine hierbei das Bremsmoment der Brennkraftmaschine deutlich senkende Leistungsabgabe zu gering und auch nicht vorgesehen.

Bei der bekannten Vorrichtung wird das zur Ansteuerung der Steuereinrichtung zur gesonderten Betätigung des Leistungssteuerorgans im Schubbetrieb dienende Drehzahlsignal aus den Impulsen einer Zündeinrichtung der Brennkraftmaschine abgeleitet. Hierzu geeignet sind auch elektronische Einrichtungen sowie ein mechanischer Fliehkraftregler.

Weiter kann mit dem aus dem Oberbegriff des unabhängigen Patentanspruches beschriebenen Verfahren beispielsweise gemäß der DE-B-2 139 230 das Ziel verfolgt werden, durch Ladungssteuerung bei einem Fahrzeug mit einer Brennkraftmaschine mit relativ hohem Bremsmoment und einem Schaltgetriebe beim Wechsel von Antrieb auf Schiebebetrieb einen erhöhten Radschlupf der angetriebenen Räder zu vermeiden. Ein relativ hohes Bremsmoment der Maschine kann vor allem bei plötzlicher Gaswegnahme, glatter Fahrbahn und kurzer Übersetzung des Schaltgetriebes einen übermäßigen Radschlupf bewirken.

Bei der aus o.g. Druckschrift bekannten Vorrichtung zur Durchführung des Verfahrens der Ladungssteuerung wird der Radschlupf ermittelt und dieser mit der jeweiligen Fahrzeuggeschwindigkeit in Bezug gebracht. Bei Überschreitung eines vorbestimmten Verhältnisses beider Betriebsgrößen im Schubbetrieb wird die Betriebsmittelzufuhr zur Brennkraftmaschine erhöht, um durch Leistungsabgabe das Bremsmoment zu reduzieren. Die bekannte Vorrichtung wird demnach schlupfabhängig gesteuert.

Der Nachteil dieser bekannten Vorrichtung ist, daß diese erst ab einem definierten Radschlupf wirksam das Bremsmoment reduziert. Dadurch geht wertvolle Reaktionszeit verloren. Weiter lassen sich mit einem definierten Radschlupf nicht alle zu einem instabilen Fahrzustand führenden Möglichkeiten beim Schubbetrieb erfassen.

Es ist daher Aufgabe der Erfindung, ein im Oberbegriff des unabhängigen Patentanspruches beschriebenes Verfahren so weiterzubilden und hierfür Vorrichtungen zur Durchführung des Verfahrens anzugeben, daß das Bremsmoment der Brennkraftmaschine vor dem Auftreten eines erhöhten Radschlupfes reduziert wird.

Diese Aufgabe wird gelöst durch die Merkmale des kennzeichnenden Teils des Anspruchs 1 bei einem Verfahren gemäß Oberbegriff dieses Anspruchs.

Kern der Erfindung ist, aus dem einen möglichen instabilen Fahrzustand des Kraftfahrzeuges auslösenden Ereignis, nämlich einem nahezu verzögerungsfrei einsetzenden Schubbetrieb, ein Signal abzuleiten zur unmittelbaren Ansteuerung des Leistungssteuerorgans der Brennkraftmaschine, um durch Ladungszufuhr die Bremsleistung bzw. das Bremsmoment bei der mit einsetzendem Schubbetrieb entsprechenden Maschinendrehzahl durch Abgabe von Leistung bzw. Drehmoment auf ein gewünschtes Maß zu verringern.

Der Vorteil der Erfindung liegt demnach darin, daß mit Eintritt des auslösenden Ereignisses bereits die Reduzierung der Bremsleistung bzw. des Bremsmomentes eingeleitet wird und damit nicht nur wertvolle Reaktionszeit gewonnen ist, sondern auch der Auslösung eines instabilen Zustandes sofort entgegengewirkt und damit eine Gefährdung herabgesetzt wird. Damit ist eine schlupfunabhängige Steuerung zur Reduzierung des Bremsmomentes erreicht. Mit der Erfindung kann so beispielsweise bei Dieselmotoren durch Einspritzen einer in Abhängigkeit der Maschinen-Drehzahl bestimmten Restmenge im Schubbetrieb das Bremsmoment auf Ottomotoren-Niveau abgebaut werden. Dabei kann insbesondere für den Winterbetrieb die Restmenge über die Außentemperatur weiter angepaßt werden.

Eine Weiterbildung der Erfindung beschäftigt sich mit dem Problem, die Steuerung dahingehend zu verbessern, daß sie auch langfristig bzw. bei einer Störung der Steuerungsorgane das Bremsmoment reduziert. Hierzu erfolgt die Steuerung der Leistungsabgabe innerhalb eines Regelkreises, bei dem das Ist-Maschinenmoment mit dem Soll-Maschinenmoment verglichen und bei fehlender Übereinstimmung mit diesem in Übereinstimmung gebracht wird.

Durch die Bestimmung des Ist-Maschinenmomentes, beispielsweise mit Hilfe eines bekannten, an der Kardanwelle angeordneten induktiven Momentensensors kann auf einfache Weise das tatsächlich abgegebene Moment und die sich durch Multiplikation des Momentes mit der Drehzahl ergebende tatsächlich abgegebene Leistung bestimmt werden. Stimmen diese Leistung bzw. dieses Moment mit den entsprechenden Sollwerten, z. B. aufgrund einer Störung oder von im Langzeitbetrieb auftretenden Toleranzen der Steuerungsorgane, nicht überein, so verhindert der Regelkreis das Auftreten eines zu großen Bremsmomentes.

Die Erfindung ist anhand von in der Zeichnung dargestellten Beispielen beschrieben. Es zeigen

Fig. 1 ein Diagramm zur Veranschaulichung der Reduzierung des Bremsmomentes,

Fig. 2 ein erstes Ausführungsbeispiel einer Vorrichtung, die über einen von der Fahrpedalstellung gesteuerten Schalter wirksam wird,

Fig. 3 ein weiteres Ausführungsbeispiel einer Vorrichtung, die über einen von der Fahrpedalstellung gesteuerten Schalter und einem der Gangerkennung dienenden Dividierer wirksam wird,

Fig. 4 ein weiteres Ausführungsbeispiel einer Vorrichtung, bei der über einen Drehzahlregler einer Einspritzpumpe ein Leerlauf-Anschlag eines Verstellhebels der Einspritzpumpe drehzahlabhängig verstellt wird.

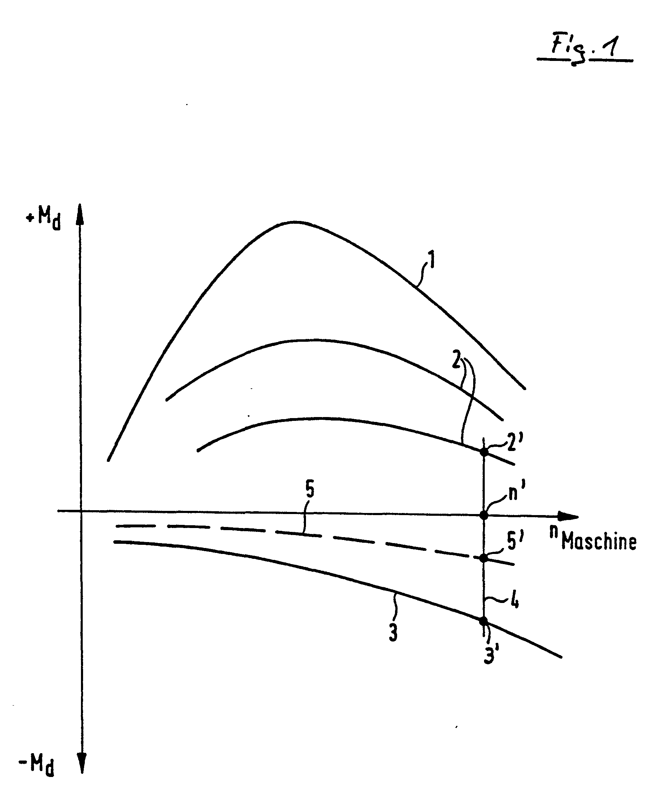

Fig. 1 zeigt ein Diagramm, in dem über der Maschinen-Drehzahl "n" einer Brennkraftmaschine in einem ersten Feld Drehmoment-Kurven 1 und 2 für Voll- und Teillast aufgetragen sind. In einem zweiten Feld ist über "n" eine Bremsmomentkurve 3 angegeben. Eine Gerade 4 veranschaulicht bei gleicher Maschinen-Drehzahl "n'" beispielsweise den Wechsel von einem Antriebsmoment in 2' zu einem nicht reduzierten Bremsmoment in 3'. Mit 5 ist eine Kurve für das über die Maschinen-Drehzahl "n" gesteuert reduzierte Bremsmoment bezeichnet. Das reduzierte Bremsmoment für den durch die Gerade 4 veranschaulichten Lastwechsel ergibt sich mit 5'. Der Verlauf des reduzierten Bremsmomentes gemäß der Kurve 5 kann an einer Brennkraftmaschine durch kontinuierliche Einwirkung der erfindungsgemäßen Vorrichtung auf ein Haupt-Leistungssteuerorgan oder ein Bypass-Leistungssteuerorgan erzielt werden.

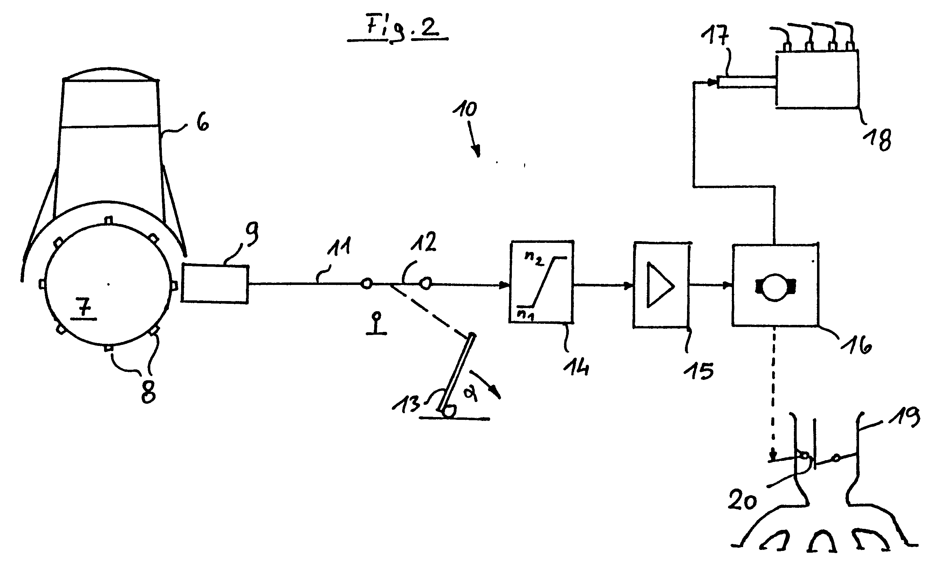

Fig. 2 zeigt eine Vorrichtung 10 in schematischer Darstellung. Eine Brennkraftmaschine 6 umfaßt eine Schwungscheibe 7, mit Zähnen 6, die an einem Induktivgeber 9 der Vorrichtung 10 vorbeigeführt sind. Der Induktivgeber 9 liefert ein der Maschinen-Drehzahl "n" proportionales Signal. In einer Leitung 11 zur Weiterleitung des Signals ist ein Schalter 12 angeordnet, der über ein Fahrpedal 13 betätigt wird. Schalter 12 und Fahrpedal 13 sind einander so zugeordnet, daß der Schalter 12 spätestens bei Ruhestellung des Fahrpedals 13 geschlossen ist. Nach dem Schalter 12 ist die Leitung 11 zu einem Schwellwertschalter 14 weitergeführt. Der Schwellwertschalter 14 sperrt solche Signale, die einer unter der Leerlaufdrehzahl "n₁" entsprechenden Maschinen-Drehzahl "n" entsprechen. Die dem oberen Schwellwert entsprechende Drehzahl "₂" kann so gewählt sein, daß sie von der Brennkraftmaschine 6 nicht erreicht wird. Ein über dem unteren Schwellwert entsprechend der Leerlauf-Drehzahl "n₁" liegendes Signal wird einem Verstärker 15 zugeführt, der das Signal verstärkt an einen Stellmotor 16 weiterleitet. Der Stellmotor 16 steht in mechanischer Wirkverbindung mit einer Regelstange 17 einer Einspritzpumpe 16, die bei einer nach dem Dieselverfahren betriebenen Brennkraftmaschine 6 als Haupt-Leistungssteuerorgan dient. Ist dagegen die Brennkraftmaschine 6 für das Otto-Verfahren mit einem Stufenvergaser 19 ausgerüstet, so kann der Stellmotor 16 mit der Drosselklappe 20 der ersten Stufe als Bypass-Leistungssteuerorgan mechanisch in Wirkverbindung stehen.

In beiden Fällen wird bei einem während des Fahrbetriebes losgelassenem, in die Ruhestellung zurückgekehrten Fahrpedal 13 durch das der jeweiligen Maschinen-Drehzahl "n" entsprechende Signal des Induktivgebers 9 das Bremsmoment der Brennkraftmaschine 6 durch zusätzliche Einspritzung oder zusätzliche Gemischzufuhr reduziert.

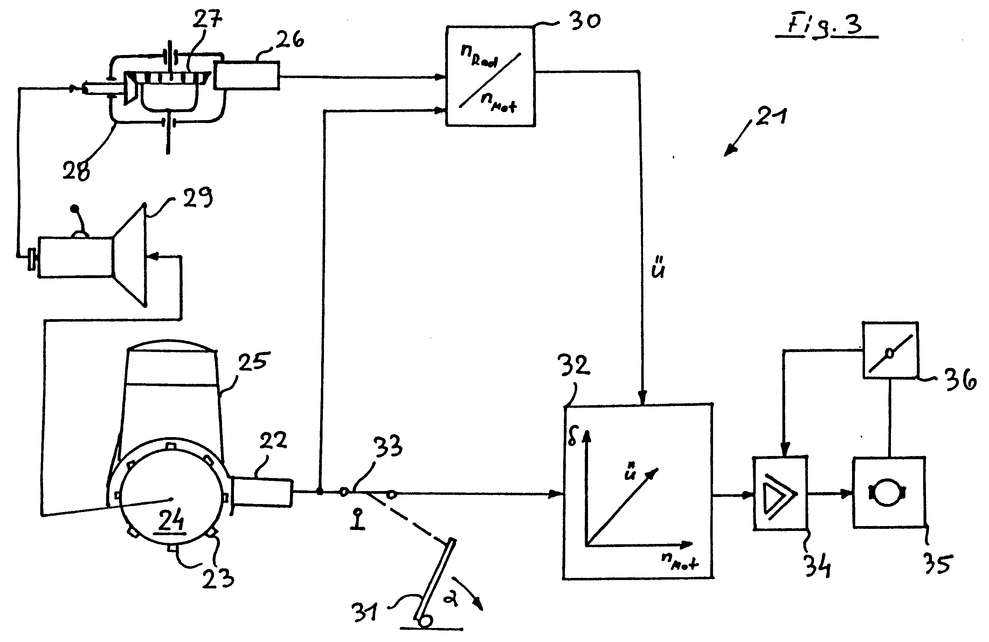

Die Vorrichtung 21 nach Fig. 3 umfaßt einen ersten Induktivgeber 22, der von Zähnen 23 an einer Schwungscheibe 24 einer Brennkraftmaschine 25 angesteuert wird. Ein zweiter Induktivgeber 26 wird von den Zähnen eines Tellerrades 27 in einem Achsverteiler-Getriebe 28 einer nicht näher gezeigten Antriebsachse des Fahrzeuges angesteuert. Zwischen dem Achsverteiler-Getriebe 28 und der Brennkraftmaschine 25 ist ein Schaltgetriebe 29 angeordnet. Die Drehzahl-Signale der beiden Induktivgeber 22 und 26 werden einem Dividierer 30 zugeführt. Bei abruptem Übergang vom Fahrbetrieb in den Schiebebetrieb durch Loslassen eines Fahrpedals 31 wirkt sich bekanntlich das Bremsmoment der Brennkraftmaschine 25 in den untersetzten Gängen des Handschaltgetriebes 29 an den Rädern der Antriebsachse aus. Der Dividierer 30 ist daher vorzugsweise so ausgebildet, daß er bei großen, durch die untersetzten Gänge des Schaltgetriebes 29 bewirkten Unterschieden zwischen der Drehzahl des Tellerrades 27 und der Maschinen-Drehzahl "n" ein Ausgangssignal "ü" an einen Stellwertgeber 32 abgibt. Der Stellwertgeber 32 steht mit dem Induktivgeber 22 an der Brennkraftmaschine 25 über einen Schalter 33 in Verbindung. Der Schalter 33 wird über das Fahrpedal 31 betätigt und kann fahrzeugspezifisch vor oder mit Erreichen der Ruhestellung des Fahrpedals 31 geschaltet werden. Im Stellwertgeber 32 werden aus den bei geschlossenem Schalter 33 eingehenden Drehzahlsignalen der Brennkraftmaschine 25 und den Ausgangssignalen "ü" des Dividierers 30 Stellsignale "δ" gebildet. Die über der Maschinen-Drehzahl "n" und dem Drehzahl-Quotienten "ü" des Dividierers 30 in einem Kennfeld ermittelten Stellsignale "δ" werden über einen Stellungsregler 34 verstärkt an einen Stellmotor 35 weitergegeben, der ein mit 36 bezeichnetes Haupt-Leistungssteuerorgan oder ein Bypass-Leistungssteuerorgan betätigt. Vom Organ 36 erfolgt eine Rückmeldung an den Stellungsregler 34, der über den Stellmotor 35 das Organ 36 so lange regelt, bis die den Stellsignalen "δ" entsprechende Reduzierung des Bremsmomentes durch zusätzliche Kraftstoffzufuhr beispielsweise bei einer Diesel-Brennkraftmaschine 25 oder zusätzliche Gemischzufuhr bei einer Otto-Brennkraftmaschine 25 erreicht ist.

Mit der Vorrichtung 21 ist die Reduzierung des Bremsmomentes der Brennkraftmaschine 25 auf die untersetzten Gänge des Schaltgetriebes 29 beschränkt. Schließlich kann der zur Gangerkennung dienende Dividierer 30 so ausgelegt sein, daß er in den untersetzten Gängen in den unteren Drehzahlen kein Ausgangssignal "ü" abgibt und somit keine Reduzierung des Bremsmomentes erfolgt.

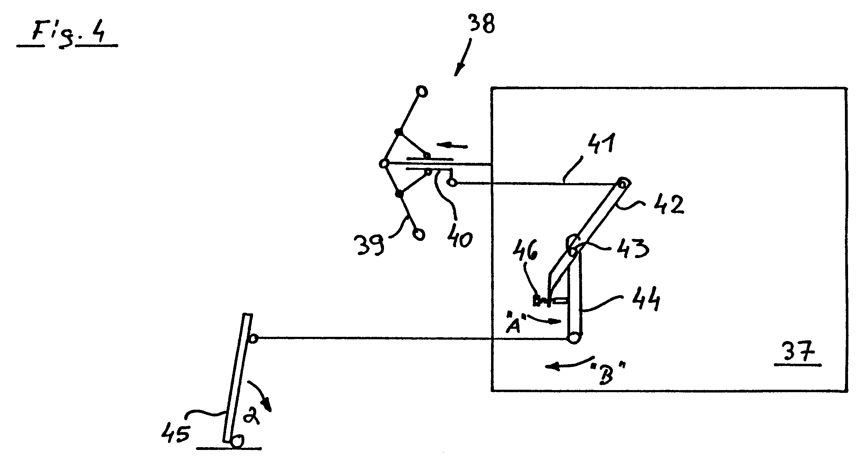

Fig. 4 zeigt schließlich eine Diesel-Einspritzpumpe 37 mit einer integrierten Vorrichtung 36. Die somit im Haupt-Leistungssteuerorgan 37 integrierte Vorrichtung 38 umfaßt einen Fliehkraftregler 39, der mit einer zur Maschinen-Drehzahl "n" proportionalen Drehzahl angetrieben ist. Der Regler 39 wirkt über seine Schiebemuffe 40 und ein Gestänge 41 auf einen Schwenkhebel 42 ein, der auf einer Achse 43 drehbar gelagert ist. Mit der Drehachse 43 drehfest verbunden ist dagegen ein Drehzahl-Verstellhebel 44 der Einspritzpumpe 37. Dieser Drehzahl-Verstellhebel 44 wird über ein Fahrpedal 45 betätigt. Dieser Drehzahlregler kann auch elektrisch ausgeführt sein.

Bei Leerlauf der nicht gezeigten Brennkraftmaschine schlägt der Drehzahl-Verstellhebel 44 gegen einen Anschlag 46, der am Schwenkhebel 42 angeordnet ist. Im Fahrbetrieb wird der Anschlag 46 entsprechend der Maschinen-Drehzahl "n" über den Fliehkraftregler 39 gemäß der Pfeilrichtung "A" dem über das Fahrpedal 45 verschwenkten Drehzahl-Verstellhebel 44 nachgeführt. Bei raschem Übergang vom Fahrbetrieb in den Schiebebetrieb schlägt der gemäß Pfeil "B" zurückschwenkende Drehzahl-Verstellhebel 44 gegen den nachgeführten Anschlag 46. Über den gegenüber seiner Leerlauf-Grundstellung abweichend positionierten Drehzahl-Verstellhebel 44 fördert die Kraftstoff-Einspritzpumpe 37 eine gegenüber der Leerlaufmenge erhöhte Kraftstoffmenge zur Brennkraftmaschine, so daß im Schiebbetrieb das Bremsmoment der Brennkraftmaschine reduziert wird. Mit sinkender Maschinen-Drehzahl "n" im Schiebebetrieb wird schließlich der Anschlag 46 in die Leerlaufposition zurückgeschwenkt und ebenso der Drehzahl-Verstellhebel 44. Über die in der Einspritzpumpe 37 integrierte Vorrichtung 38 ist erreicht, daß die Leistungsabgabe der Brennkraftmaschine beim Schubbetrieb in Abhängigkeit von der Maschinen-Drehzahl "n" gesteuert wird.

Den in den Fig. 2 bis 4 dargestellten Steuerungs-Vorrichtungen kann zusätzlich ein Regelkreis überlagert sein. Dabei bestimmt ein nicht dargestellter, beispielsweise induktiv arbeitender Momentensensor an der Kardanwelle das tatsächlich abgegebene Maschinenmoment. Ein ebenfalls nicht dargestellter Regler stellt Abweichungen dieses Moments vom erforderlichen, durch die Kurve 5 gegebenen Moment fest und korrigiert ggf. das abgegebene Moment durch einen entsprechenden Regeleingriff am jeweiligen Leistungssteuerorgan.

**Patentansprüche**

1. Verfahren der Ladungssteuerung von Brennkraftmaschinen, insbesondere Dieselmotore, in Kraftfahrzeugen beim Schubbetrieb,
- wobei ein Leistungssteuerorgan der Brennkraftmaschine zur Antriebs-Leistungssteuerung über ein Fahrpedal betätigt wird, und
- dieses Leistungssteuerorgan beim Schubbetrieb unabhängig vom Fahrpedal gesondert betätigt wird von einer Steuereinrichtung,
- die zur Bewirkung einer gegenüber dem Leerlaufbedarf der Brennkraftmaschine erhöhten Ladung von einem Signalgeber gesteuert wird, dadurch gekennzeichnet,
- daß über den mit der jeweiligen, mit Beginn des Schubbetriebes durch Loslassen des Fahrpedals gegebenen Brennkraftmaschinen-Drehzahl aktivierten Signalgeber gesteuert der Brennkraftmaschine eine in Abhängigkeit der jeweiligen Brennkraftmaschinen-Drehzahl angepaßte Ladung für eine Leistungsabgabe der Brennkraftmaschine zur vorbestimmten Reduzierung des jeweiligen maschinendrehzahlabhängigen Bremsmomentes der Brennkraftmaschine im Schubbetrieb zugeführt wird.

2. Verfahren nach Anspruch 1, gekennzeichnet durch die Verwendung eines als Signalgeber dienenden Schalters (12), der von einem in Richtung Ruhestellung bewegten Fahrpedal (13) geschlossen wird und der einen die Maschinendrehzahl erfassenden Sensor (9) mit einem Schwellwertschalter (14) signalführend verbindet, wobei ein Signal zwischen den durch vorbestimmte Grenzdrehzahlen ($n_1$, $n_2$) der Brennkraftmaschine (6) festgelegten Schwellwerten des Schwellwertschalters verstärkt auf einen als Steuereinrichtung dienenden Stellmotor (16) einwirkt, der mit dem Leistungssteuerorgan (Einspritzpumpe 18, Stufenvergaser 19) in Antriebsverbindung steht.

3. Verfahren nach Anspruch 1, gekennzeichnet durch die Verwendung eines die Maschinen-Drehzahl erfassenden Sensors (22) und eines die Drehzahl im Antriebsstrang (28) nach einem Schaltgetriebe (29) erfassenden Sensors (26), deren beide Signale einem Dividierer (30) zugeführt sind, dessen Ausgangssignal (ü) mit dem über einen als Signalgeber dienenden Schalter (33), der von einem in Richtung Ruhestellung bewegten Fahrpedal (31) geschlossen wird, durchgeschaltetes Drehzahlsignal des ersten Sensors (22) in einem Stellwertgeber (32) ein Stellsignal bewirkt, das über einen Stellungsregler (34) einen als Steuereinrichtung dienenden Stellmotor (35) zur Betätigung des Leistungssteuerorgans (Drosselklappe 36) der Brennkraftmaschine (25) aktiviert.

4. Verfahren nach Anspruch 3, dadurch gekennzeichnet, daß im Stellwertgeber (32) Ausgangssignal (ü) und Maschinen-Drehzahl-Signal (Sensor 22) nach einem Kennfeld verknüpft werden.

5. Verfahren nach Anspruch 1, gekennzeichnet durch die Verwendung eines als Signalgeber dienenden mechanischen oder elektrischen Drehzahlreglers (39) einer Einspritzpumpe (37) als Leistungssteuerorgan, über den ein Leerlauf-Anschlag (46) an einem als Steuereinrichtung dienenden Hebel (42) eines über ein Fahrpedal (45) betätigten Drehzahl-Verstellhebels (44) der Einspritzpumpe maschinendrehzahlabhängig verstellt wird.

6. Verfahren nach einem der Ansprüche 1 bis 5, dadurch gekennzeichnet, daß die Steuerung der Leistungsabgabe innerhalb eines Regelkreises erfolgt, bei dem das Ist-Maschinenmoment mit dem Soll-Maschinenmoment verglichen und bei fehlender Übereinstimmung mit diesem in Übereinstimmung gebracht wird.

**Revendications**

1. Procédé de commande de l'alimentation de moteurs à combustion interns, notamment de moteurs Diesel, dans des véhicules automobiles en décélération, procédé dans lequel:
- un organe de commande de la puissance du moteur à combustion interne, permettant de commander la puissance d'entraînement, est actionné par l'intermédiaire de la pédale d'accélérateur,
- cet organe de commande de la puissance est actionné, en cas de décélération et indépendamment de la pédale d'accélérateur, séparément par un dispositif de commande,
- ce dispositif, pour permettre d'assurer une alimentation plus élevée que les besoins du moteur à combustion interne au ralenti, est commandé par un émetteur de signaux, procédé caractérisé en ce que:
- commandée par l'intermédiaire de l'émetteur de signaux, lui-même activé par la vitesse de rotation du moteur à combustion interne résultant au début de la décélération du relâchement de la pédals d'accélérateur, une alimentation, ajustée en fonction de la vitesse de rotation considérée du moteur à combustion interne, est fournie à ce moteur pour que celui-ci délivre de la puissance afin depermettre une réduction prédéterminée du couple de freinage en décélération, dépendant de la vitesse de rotation, du moteur à combustion interne.

2. Procédé selon la revendication 1, caractérisé en ce qu'on utilise un commutateur (12), jouant le rôle d'émetteur de signaux, qui est fermé par une pédale d'accélérateur (13) lorsqu'elle est déplacée dans la direction de sa position de repos, et qui relie ensemble, de façon à permettre la transmission de signaux, un détecteur (9) de la vitesse de rotation du moteur avec un commutateur (14) à valeurs de seuil, un signal, se situant entre les valeurs de seuil, fixées par des vitesses de rotation limites prédéterminées ($n_1$, $n_2$) du moteur à combustion interne (6), agissant après amplification sur un moteur de réglage (16) jouant le rôle de dispositif de commande, et qui est en liaison d'entraînement avec l'organe de commande de la puissance (pompe d'injection 18, carburateur (19).

3. Procédé selon la revendication 1, caractérisé en ce qu'on utilise un détecteur (22) de la vitesse de rotation du moteur et un détecteur (26) de la vitesse de rotation sur la ligne d'entraînement (28) après une boîte de changement de vitesses (29), les deux signaux de ces détecteurs étant appliqués à un diviseur (30), dont le signal de sortie (ü), avec le signal de vitesse de rotation du premier détecteur (22), transmis par un commutateur (33) jouant le rôle d'émetteur de signal et qui est fermé par une pédale d'accélérateur (31) lorsque celle-ci est déplacée en direction de sa position de repos, provoque dans un émetteur de valeurs de réglage (32) l'émission d'un signal de réglage, lequel active, par l'intermédiaire d'un régulateur de position (34), un moteur de réglage (35) jouant le rôle de dispositif de commande, pour actionner l'organe de commande de la puissance (clapet d'étranglement 36) du moteur à combustion interne (25).

4. Procédé selon la revendication 3, caractérisé en ce que, dans l'émetteur de valeurs de réglage (32), le signal de sortie (ü) et le signal de vitesse de rotation du moteur (détecteur 22) sont combinés selon un champ caractéristique.

5. Procédé selon la revendication 1, caractérisé en ce qu'on utilise comme organe de commande de la puissance un régulateur, mécanique ou électrique, de vitesse de rotation (39) d'une pompe d'injection (37), organe de commande par l'intermédiaire duquel est réglée, en fonction de la vitesse de rotation du moteur, une butés de marche à vide (46) sur un levier (42), jouant le rôle de dispositif de commande, d'un levier (44) de réglage de la vitesse de rotation de la pompe d'injection, ce levier de réglage étant actionné par l'intermédiaire d'une pédale d'accélérateur (45).

6. Procédé selon une des revendications 1 à 5 caractérisé en ce que la commande de délivrance de la puissance s'effectue dans un circuit de réglage ou le couple réel du moteur est comparé avec le couple de consigne du moteur et, lorsqu'il n'y a pas coïncidence, est amené en coïncidence avec ce couple de consigne.

## Claims

1. A method of controlling the load on combustion engines, especially Diesel engines, in decelerating lorries,
- wherein power control means of the combustion engine for the power control drive are actuated through an accelerator pedal, and
- these power control means of the lorry are actuated independently of the accelerator pedal by a respective control device,
- which for operation of the combustion engine at an increased load over and above no-load operation is controlled by an alarm or signal device,
characterised in that:
- with the activation of the alarm in dependence on engine revolutions following the start of the deceleration through release of the accelerator pedal, the combustion engine is controlled by a matched load in dependence on the respective combustion engine revolutions to produce a power dissipation of the combustion engine leading to a predetermined reduction of the revolutions-dependent braking moment of the combustion engine during deceleration.

2. A method according to claim 1, characterised by the use of a switch (10) as an alarm or signal device which is closed by movement of a accelerator pedal (13) into the rest position and which is connected for the transmission of a signal to a machine revolutions-dependent sensor (9) having a threshold-level switch (14), wherein a signal from the threshold-level switch between the predetermined speeds ($n_1$, $n_2$) of the combustion engine (6) is amplified and passed to a servo-motor (16) serving as a control device which is in driving connection with the power control means (injection pump 18, carburettor 19).

3. A method according to claim 1, characterised by the use of a sensor (22) which measures the machine revolutions and a sensor (26) which measures the revolutions in the drive transmission (28) beyond a change-speed gear (29), with both signals of the sensors being fed to a divider (30) whose output signal (ü) is combined in a threshold-level device (32) with a signal fed from a switch (33) which is closed when an accelerator pedal (31) is moved into the rest position, which then activates a position regulator (34) for the activation of the power control means (throttle valve 36) of the combustion engine (25) through a servo-motor (35).

4. A method according to claim a, characterised in that the output signal (ü) to the threshold-level device (32) and the machine-revolutions signal (sensor 22) have their characteristics combined.

5. A method according to claim 1, characterised by the use of a mechanical or electrical revolutions regulator (39) as a signal generator with an injection pump (37) as power control means, there being a slow-running adjuster (45) on a lever (42) serving as a control device which is connected to the accelerator pedal (45) through a revolutions-dependent lever (44) to make the injection pump dependent on machine revolutions.

6. A method according to any one of claims 1 - 5, characterised in that the control of the power dissipation is effected within a regulating circuit whereby the first machine moment is compared with a reference machine moment and any lack of agreement is remedied.

Fig. 1

Fig.2

Fig. 3

0 104 539

Fig.4

38

41

42

43

46

"A"

44

37

39

40

"B"

45

2

0 104 539